(19) Europäisches Patentamt

European Patent Office

Office européen des brevets

(11) **EP 4 679 032 A1**

(12) **EUROPEAN PATENT APPLICATION**

(43) Date of publication:
**14.01.2026 Bulletin 2026/03**

(21) Application number: **24188391.7**

(22) Date of filing: **12.07.2024**

(51) International Patent Classification (IPC):
*G01C 15/00* *(2006.01)*

(52) Cooperative Patent Classification (CPC):
**G01C 15/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hilti Aktiengesellschaft
9494 Schaan (LI)**

(72) Inventor: **Gloor, Thomas
9495 Triesen (LI)**

(74) Representative: **Hilti Aktiengesellschaft
Corporate Intellectual Property
Feldkircherstrasse 100
Postfach 333
9494 Schaan (LI)**

(54) **METHOD FOR DETERMINING AN ACCURACY FOR A POINT OF INTEREST**

(57) A computer-implemented method for determining an accuracy, that can be achieved during operating a surveying instrument at a point of interest, the method being performed by a computer system and comprising the steps:

- Computing for the surveying instrument a pose vector and corresponding variances and covariances for the pose elements of the pose vector,
- Computing the accuracy that can be achieved at the point of interest during operating the surveying instrument based on the pose vector, the variances and covariances of the pose elements, on measuring accuracies of the surveying instrument, and on coordinates of the point of interest, and
- Instructing a display to visualize the accuracy for the point of interest.

S10 — Computing for the total station, a pose vector and corresponding variances and covariances for the pose elements

S20 — Computing the accuracy that can be achieved during operating the total station at the POI based on the pose vector, the variances and covariances of the pose elements, on measuring accuracies of the total station, and on the coordinates of the point of interest

S30 — Instructing a display to visualize the accuracy for the point of interest

FIG. 4

EP 4 679 032 A1

## Description

The present invention relates to a method for determining an accuracy for a point of interest according to the definition of claim 1, to a computer program according to the definition of claim 5, and to an apparatus according to the definition of claim 6.

## Background of the invention

Surveying instruments, such as total stations, are used in construction industries to take individual, highly accurate measurements within a worksite, using a precise electronic distance measuring device, accurate motors to rotate this electronic distance measuring device, and angle measuring devices to measure the orientation of the electronic distance measuring device. Centered within a total station is its coordinate frame and the orientation of the coordinate frame is usually such that the total station's x-axis pointing towards right, y-axis pointing towards the floor, and z-axis pointing into forward direction.

Known workflows to determine the pose (position and orientation) of a total station are based on manually or automatically taking measurement samples of distance and angle data in the worksite. Based on a scalable mathematical equation system, the pose can be calculated with a varying degree of precision, depending on the amount of sampling information considered and their geometrical distribution. To solve the pose calculation, a minimum number of measurement samples needs to be taken, while an increasing number of measurement samples usually leads to the formation of an overdetermined mathematical equation system and an overall improved accuracy of the pose calculation.

The basic concept of surveying using a total station is that at an initial phase, a number of control points are positioned at scattered locations at the worksite to be surveyed. Typically, control points are materialized by prisms, cat-eyes, reflective foils, or other forms of reflective targets for returning the laser beam from the total station. The exact location of each control point is determined and logged in terms of coordinates on a specified coordinate frame, typically the coordinate frame of a floorplan of the worksite. A total station can then sight a number of these control points to determine its absolute position on that X, Y, Z coordinate frame using standard triangulation techniques.

In operation, the operator determines the distance and angle data successively for each control point. These data are stored in the total station's computer system together with the absolute position data for the respective control points, the latter position data being pre-loaded into the total station. The total station then implements an algorithm, generally known as a free-stationing algorithm, to determine its pose from the sightings of those control points. The positioning accuracy of a total station is inversely proportional to the square root of the number of control points it can exploit from its location, the angular distribution of those control points, as well as the stability of the worksite at which the control points and the total station are deployed.

Typically, the pose and its standard deviation are shown to the operator as numerical values and the interpretation of the quality is left to the operator and depends on his experience. To support the operator in the interpretation of the pose and its quality, Leica has released in November 2022 a new version v7.5 of their iCON Field software and included a functionality that shows to the operator a recommended working area that is a polygon created by the control points used for computing the pose. The disadvantage of the known functionality is that the working area is not evaluated based on an accuracy threshold that can be achieved during measuring and/or layouting with the total station and the pose is not used for determining the working area.

## Summary of the invention

Therefore, what is desired is a method for determining an accuracy that can be achieved during operating a surveying instrument at a point of interest. An operator of the surveying instrument should be supported in the interpretation of the quality of the pose vector and in the accuracy, he can achieve at the point of interest during operating the surveying instrument.

These objectives are achieved by realizing the features of the independent claims. Features which further develop the invention in an advantageous manner are described in the dependent claims.

According to an aspect of the present invention, there is provided a computer-implemented method for determining an accuracy, that can be achieved during operating a surveying instrument at a point of interest, the method being performed by a computer system and comprising the steps:

- Computing for the surveying instrument a pose vector and corresponding variances and covariances for the pose elements of the pose vector,
- Computing the accuracy based on the pose vector, the variances and covariances of the pose elements, on measuring accuracies of the surveying instrument, and on the coordinates of the point of interest, and
- Instructing a display to visualize the accuracy for the point of interest.

The method according to the present invention determines the accuracy that can be achieved at a point of interest during operating the surveying instrument. The accuracy is dependent on the quality of the pose vector and on the measuring accuracies of the surveying instrument, and the accuracy is computed by the computer system based on the pose vector, the variances and covariances of the pose elements, on the measuring accuracies of the surveying instrument, and on the coordinates of the point of interest.

The present invention allows to compute for the points of interest, such as for layout points, the accuracies that can be achieved during operating the surveying instrument. The operator can decide if the quality of the pose vector is sufficient for his application or if he needs a more accurate pose vector. The measuring accuracies of the surveying instrument are fixed values that are typically stored in the manual of a surveying instrument.

Preferably, the accuracy u(POI) that can be achieved at the point of interest is defined by

$$u(POI) = \sqrt{Trace\ H\Sigma H^{T}}, \text{ with } \Sigma = \begin{bmatrix} Q_{XX} & 0 & 0 \\ 0 & \sigma_{HA}^2 & 0 \\ 0 & 0 & \sigma_{HD}^2 \end{bmatrix},$$

$$H = \begin{bmatrix} 1 & 0 & HD*\cos(HA+ori) & HD*\cos(HA+ori) & \sin(HA+ori) \\ 0 & 1 & -HD*\sin(HA+ori) & -HD*\sin(HA+ori) & \cos(HA+ori) \end{bmatrix},$$

and

$$Q_{XX} = \begin{bmatrix} Q_{E_S,E_S} & Q_{E_S,N_S} & Q_{E_S,ori} \\ Q_{N_S,E_S} & Q_{N_S,N_S} & Q_{N_S,ori} \\ Q_{ori,E_S} & Q_{ori,N_S} & Q_{ori,ori} \end{bmatrix}$$

In a preferred embodiment, the accuracy that was computed for the point of interest is compared by the computer system with a predefined accuracy threshold to verify if the accuracy threshold can be achieved for the point of interest during operating the surveying instrument. By checking via the computer system whether a predefined accuracy threshold can be achieved for a point of interest, the operator is supported in achieving the required accuracy.

Preferably, the method further comprises the steps:

- upon verification that the accuracy threshold can be achieved for the point of interest, a predefined action is performed, the predefined action comprising generating a message stating that the accuracy threshold can be achieved for the point of interest, and
- upon verification that the accuracy threshold cannot be achieved for the point of interest, a predefined action is performed, the predefined action comprising generating a message stating that the accuracy threshold cannot be achieved for the point of interest.

By checking via the computer system whether a predefined accuracy threshold can be achieved for a point of interest, the operator is supported in achieving the required accuracy for a point of interest.

According to a further aspect of the present invention, there is provided a computer program comprising instructions, which, when executed by a computer system, cause the computer system to carry out the method according to the present invention. The computer program may be stored on the computer system or on a computer-readable medium communicatively connected to the computer system. The term "computer-readable medium" includes, but is not limited to, portable or non-portable storage devices, optical storage devices, and various other mediums capable of storing, containing, or carrying instruction(s) and/or data.

According to a further aspect of the present invention, there is provided an apparatus comprising means for carrying out the method according to the present invention.

## Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,

FIG. 1 shows an operator using a surveying instrument deployed at a worksite, the surveying instrument comprising a measuring unit mounted on a tripod and a remote controller connected via a communication link to the measuring unit,

FIGS. 2A, B show an exemplary version of the measuring unit used in the surveying instrument of FIG. 1 (FIG. 2A) and a block diagram of the main components of the measuring unit as illustrated in FIG. 2A (FIG. 2B),

FIGS. 3A, B show an exemplary version of the remote controller used in the surveying instrument of FIG. 1 (FIG. 3A) and a block diagram of the main components of the remote controller as illustrated in FIG. 3A (FIG. 3B),

FIG. 4 shows a method for determining for a point of interest an accuracy according to the present invention in a flow chart,

FIG. 5 illustrates a graphical user interface of an exemplary implementation how the operator can define an accuracy threshold for layout points,

FIGS. 6A, B illustrate the graphical user interface of FIG. 5 during layouting, wherein a predefined accuracy threshold can be achieved (FIG. 6A) or cannot be achieved (FIG. 6B).

## Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms.

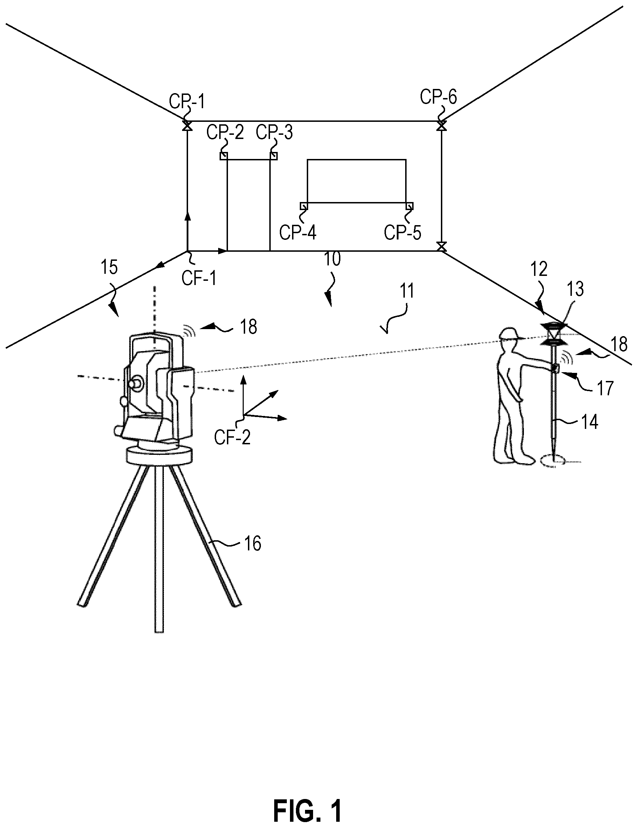

**FIG. 1** shows an operator using a surveying instrument **10** deployed at a worksite **11.** The worksite 11 may be a construction site, inside or outside, or a surveying site, amongst others. In addition to the surveying instrument 10, a target **12** that is remote from the surveying instrument 10 may be deployed at the worksite 11. The target 12 may include a reflector **13**, such as a prism and/or a cat-eye, that is mounted on top of a pole **14.**

The surveying instrument 10 is formed as a total station and comprises a measuring unit **15** that is mounted on a mounting support structure in the form of a tripod **16.** The surveying instrument 10 also comprises a removable control panel in the form of a remote controller 17 that can be used for remote control of the measuring unit 15 via a wireless connection **18.**

Before the operator can use the total station 10 for layouting, measuring and/or other tasks, the total station must be stationed via a stationing process to the worksite 11. From prior art, different stationing processes are known, such as free-stationing process, model-based stationing process, automatic stationing process, or any other stationing process.

The basic concept of free-stationing processes is that at an initial phase, a number of control points, here control points **CP-1, CP-2, CP-3, CP-4, CP-5, CP-6**, are positioned at scattered locations at the worksite 11. The control points are materialized by prisms, cat-eyes, reflective foils, or other forms of reflective targets for returning the laser beam from the total station. The exact location of the control points is determined and logged in terms of coordinates on a specified coordinate frame, here the coordinate frame of the worksite 11.

To determine the pose (position and orientation) of the total station 10 in the coordinate frame of the worksite 11, the total station 10 sights a number of the control points and takes measurement samples of distance and angle data in its coordinate frame. To differ between the coordinate frames, the coordinate frame of the worksite 11 is called "first coordinate frame" **CF-1** and the coordinate frame of the total station 10 is called "second coordinate frame" **CF-2.** The coordinates in the first coordinate frame CF-1 are called "first coordinates" and the coordinates in the second coordinate frame CF-2 are called "second coordinates".

Based on a mathematical equation system, the pose of the total station can be calculated from the first coordinates of the control points in the first coordinate frame CF-1 and from the second coordinates of the control points in the second coordinate frame CF-2. With increasing number of measurement samples and a good angular distribution of the control points at the worksite 11 the position accuracy of the pose can increase.

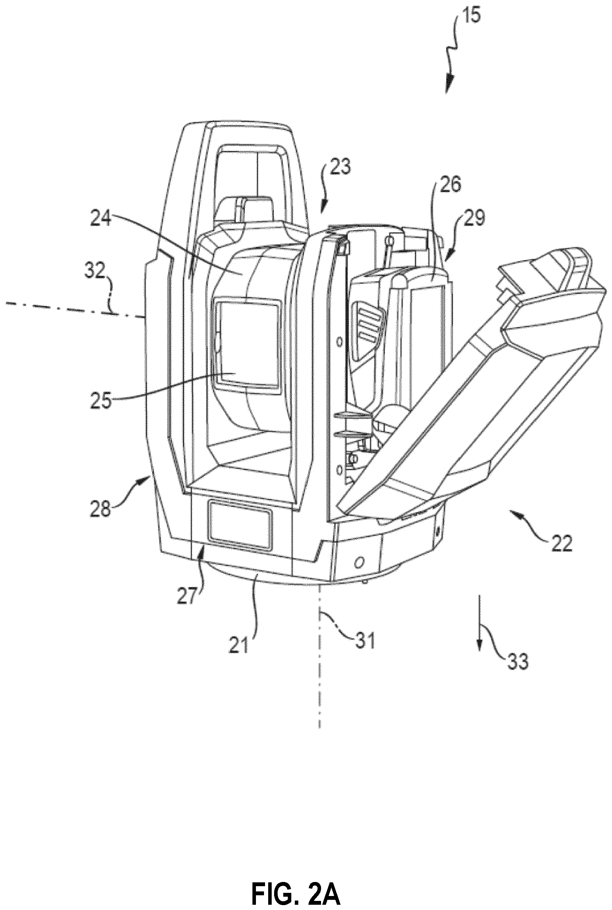

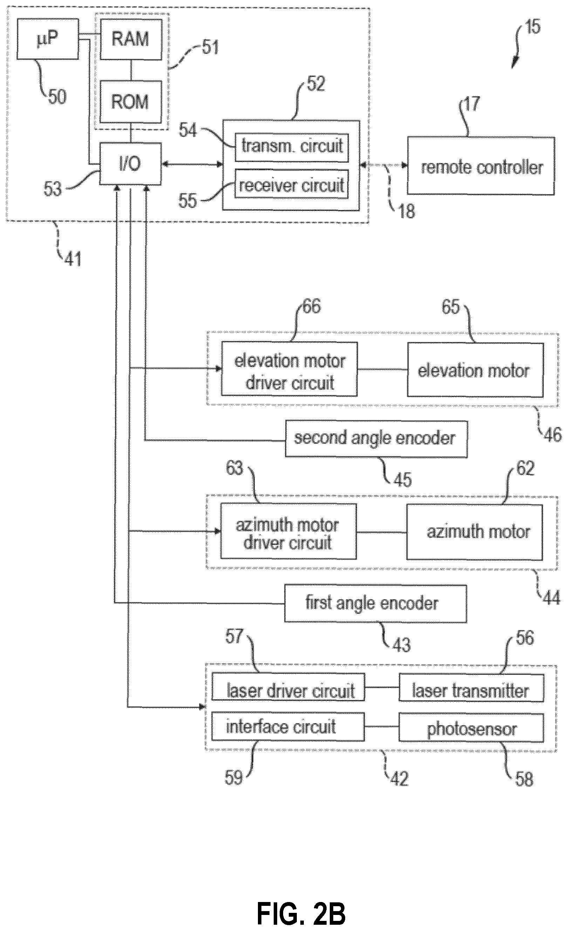

**FIGS. 2A, B** show an exemplary version of the measuring unit 15 used in the surveying instrument 10 of FIG. 1 in a perspective view (FIG. 2A) and a block diagram of the main components of the measuring unit 15 as illustrated in FIG. 2A (FIG. 2B).

The surveying instrument 10 is designed as robotic total station and the measuring unit 15 comprises a base **21**, a support **22**, and a measuring head **23**. The measuring head 23 is enclosed by a housing **24**, which includes an exit window **25.** In the housing 24, a distance measuring device that can emit a distance measuring beam and a tracking device that can emit a radiation are arranged. The distance measuring beam and the radiation are emitted through the exit window 25 to leave the housing 24.

In the exemplary version of FIG. 2A, the support 22 is U-formed and includes a bottom portion **27**, a first side portion **28**, and a second side portion **29.** The support 22 can rotate completely around its circumference at a full 360° angle with respect to the base 21 about a first axis of rotation **31.** The measuring head 23 is pivotably mounted to the support 22 about a second axis of rotation **32** and is arranged between the first side portion 28 and the second side portion 29 of the support. Usually, the first axis of rotation 31 is aligned parallel to a local direction of gravitation **33**, and the second axis of rotation 32 is aligned perpendicular to the local direction of gravitation 33.

An azimuth motor device and a first angle encoder may be located in the bottom portion 27 of the support 22 and allow to rotate the measuring unit 15 about the first axis of rotation 31 and to determine the direction of the distance measuring beam in a first plane perpendicular to the first axis of rotation 31. An elevation motor device and a second angle encoder may be located in the first side portion 28 of the support 22 and allow the measuring head 23 to pivot about the second axis of rotation 32 and to determine the direction of the distance measuring beam in a second plane perpendicular to the second axis of rotation 32. To make the instrument 12 fully automatic, a self-leveling device, which may be arranged in the bottom portion 27 of the support 22, can be included.

FIG. 2B shows a block diagram of the main components of the measuring unit 15 of the surveying instrument 10. The measuring unit 15 includes a first electronic device **41**, a distance measuring device **42**, a first angle encoder **43**, an azimuth motor device **44**, a second angle encoder **45**, and an elevation motor device **46.** Optionally, the measuring unit 15 can additionally include one or more cameras, such as a tracking camera configured to track a reflector target, or an aiming camera configured to let the user aim to a point of interest.

The first electronic device 41 comprises a first processing circuit ($\mu$P) **50**, a first memory circuit **51** that may include associated random-access memory (RAM) and read only memory (ROM), a first communications circuit **52**, and a first input/output (I/O) interface circuit **53.** The first processing circuit 50, also called device control unit, may communicate with the first memory circuit 51 and first communications circuit 52 and is configured to control the laser instrument 12. The first communications circuit 52 includes a first transmitter circuit **54** and a first receiver circuit **55** and is configured to be connected to a communications circuit of the remote controller via the communication link. The first input/output interface circuit 53 is an interface between the first processing circuit 50 and the various types of motor driver circuits and sensor circuits of the measuring unit 15.

The distance measuring device 42 includes a laser transmitter **56**, a laser driver circuit **57**, a photosensor **58**, and a laser receiver interface circuit **59.** The laser driver circuit 57 provides current for the laser transmitter 56 which emits a distance measuring beam. The photosensor 58 receives at least a part of the distance measuring beam reflected at a target or a surface of the worksite, and the current signal that is outputted by the photosensor 58 is directed to the laser receiver interface circuit 59. After appropriate amplification and demodulation, the signal is sent via the first input/output interface circuit 53 to the first processing circuit 50. The first angle encoder 43 provides input signals to the first processing circuit 50, so that it knows exactly in which horizontal angle the laser transmitter 56 is arranged in the horizontal plane; the output signal of the first angle encoder 43 is directed to the first input/output interface circuit 53. The azimuth motor device 44 includes an azimuth motor **62**, which is the motive force to rotate the main housing 22 of the measuring unit 15 about the first axis of rotation 31, and an azimuth motor driver circuit **63**, which will provide the proper current and voltage to drive the azimuth motor 62.

The second angle encoder 45 provides input signals to the first processing circuit 50, so that it knows exactly in which second angle the laser transmitter 56 is arranged in the second plane; the output signal of the second angle encoder 45 is directed to the first input/output interface circuit 53. The elevation motor device 46 includes an elevation motor **65**, which is the motive force to pivot the measuring head 23 about the second axis of rotation 32, and an elevation motor driver circuit **66**, which will provide the proper current and voltage to drive the elevation motor 65.

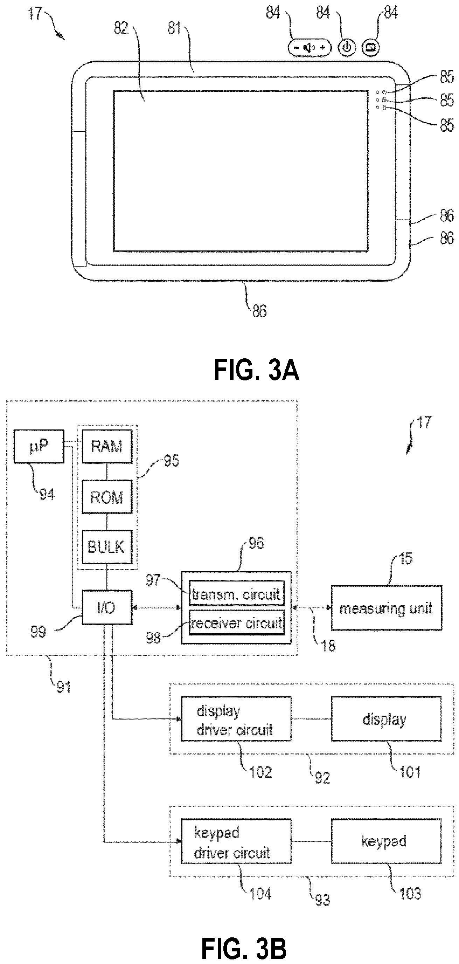

**FIGS. 3A, B** show an exemplary version of the remote controller 17 used in the surveying instrument 10 of FIG. 1 in a front view (FIG. 3A) and a block diagram of the main components of the remote controller 17 as illustrated in FIG. 3A (FIG. 3B).

The remote controller 17 is designed as tablet computer and includes a housing **81,** a touch screen display **82,** a battery **83,** a set of buttons **84,** e.g., volume control button, power on/off button, and display control button, a set of indicators **85,** e.g., for operating status, data storage status, and battery status, a set of connectors **86,** e.g., for docking, data storage, and USB, and a card slot **87.**

FIG. 3B shows a block diagram of the main components of the remote controller 17. The remote controller 17 may include a second electronic device **91,** a display device **92,** and an input device **93.**

The second electronic device 91 comprises a second processing circuit ($\mu$P) **94**, a second memory circuit **95** that may include associated random-access memory (RAM), read only memory (ROM), and some type of bulk memory (BULK), a second communications circuit **96,** and a second input/output (I/O) interface circuit **97.** The second processing circuit 94 may communicate with the second memory circuit 95 and second communications circuit 96 and is configured to control the remote controller 17. The second communications circuit 96 includes a second transmitter circuit **98** and a second receiver circuit **99** and is configured to be connected to the first communications circuit 52 of the measuring unit 15 via the wireless communication 18. The second input/output interface circuit 97 is an interface between the second processing circuit 94 and the various driver circuits of the remote controller 17.

In the second memory circuit 95 several program codes having computer-executable instructions for performing a method may be stored. The stored program codes may include a program code for performing a method for determining an accuracy, that can be achieved during operating the surveying instrument at a point of interest.

The method for determining an accuracy for a point of interest is performed by a computer system. The term computer system is defined as a device or collection of devices, including input and output support devices, and excluding calculators which are not programmable and capable of being used in conjunction with external files, which contain computer programs, electronic instructions, input data and output data, that performs logic, arithmetic, data storage and retrieval, communication control and other functions.

In the exemplary version of the surveying instrument 10, the computer system is integrated into the second processing circuit 94 of the second electronic device 91 of the remote controller 17. Alternatively, the computer system may be integrated into the first processing circuit 50, or into the first and second processing circuits 50, 94, or in any other type of suitable processing circuit.

The display device 92 includes a display **101** and a display driver circuit **102.** The display driver circuit will be in communication with the second I/O interface circuit 97 and provides the correct interface and data signals for the display 101. If the remote controller 17 is a laptop computer, for example, then this would be the standard display seen in most laptop computers. Or, if the remote controller 17 is a tablet computer or a smart phone, in which case the display device is a much smaller physical device, the display device 101 could be a touch screen display.

The user-operated input device 93 includes a keypad **103** and a keypad driver circuit **104.** The keypad driver circuit will be in communication with the second I/O interface circuit 97 and controls the signals that interface to the keypad 103. If the display device 101 is a touch screen display, then there may not be a separate keypad on the remote controller 17, because most of the command or data to input functions will be available by touching the display itself and the keypad is integrated in the touch screen display. There may be some type of power on/off button, but that would not necessarily be considered a true keypad and typically would not be used for entering data.

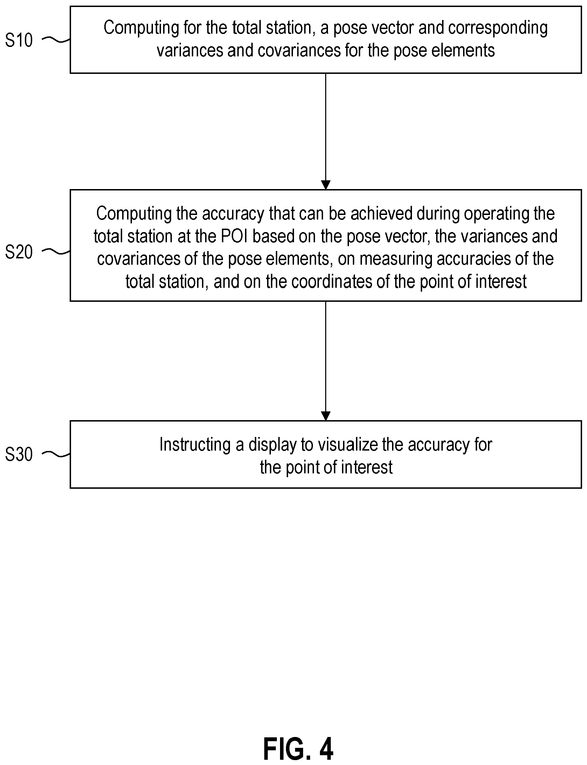

**FIG. 4** shows a method for determining an accuracy for a point of interest (POI) according to the present invention in a flow chart. The method is performed by the computer system 94 and the surveying instrument 10 is deployed at the worksite 11.

The method for determining an accuracy for a point of interest comprises the following steps:

- Computing for the surveying instrument 10 a pose vector ($E_S$, $N_S$, ori) and corresponding variances ($Q_{E_S,E_S}$, $Q_{N_S,N_S}$, $Q_{ori, ori}$) and covariances ($Q_{E_S,N_S}$, $Q_{E_S,ori}$, $Q_{N_S,ori}$) for the pose elements of the pose vector (step **S10**),
- Computing the accuracy, that can be achieved during operating the surveying instrument 10 at the point of interest, based on the pose vector ($E_S$, $N_S$, ori), the variances ($Q_{E_S,E_S}$, $Q_{N_S,N_S}$, $Q_{ori, ori}$) and covariances ($Q_{E_S,N_S}$, $Q_{E_S,ori}$, $Q_{N_S,ori}$) of the pose elements, on measuring accuracies ($\sigma_{HD}$, $\sigma_{HA}$) of the surveying instrument 10, and on the coordinates of the point of interest (step **S20**), and
- Instructing a display 101 to visualize the accuracy for the point of interest (step **S30**).

In step S10, the pose vector ($E_S$, $N_S$, ori) and corresponding variances and covariances of the pose elements are computed for the surveying instrument 10 by means of well-known methods for stationing a surveying instrument. Well-known methods for stationing are free-stationing processes, model-based stationing processes, and automatic stationing processes, but any other stationing process can also be used. In the patent applications WO 2024/141424 A1 and WO 2024/141425 A1, model-based stationing processes for determining a pose for a surveying instrument without using a set of control points having known coordinates in the first coordinate frame of the worksite are disclosed.

Free-stationing processes use at least two control points with known coordinates in the first coordinate frame of the worksite to compute the pose vector ($E_S$, $N_S$, ori). In an exemplary version, the pose vector ($E_S$, $N_S$, ori) is computed based on control points CP-2 and CP-13.

The control points CP-2 and CP-13 have known Euclidean coordinates $E_2$, $N_2$ respectively $E_{13}$, $N_{13}$ in the first coordinate frame CF-1 of the worksite and the angle and distance data $HA_2$, $HD_2$ respectively $HA_{13}$, $HD_{13}$ have been measured by means of the surveying instrument 10.

With the assumption that the orientation of the surveying instrument 10 is zero, the Euclidean coordinates

$$E_2^{`}, N_2^{`} \text{ respectively } E_{13}^{`}, N_{13}^{`}$$

in the second coordinate frame CF-2 can be written for the control points CP-2 and

CP-13 as:

$$E_2^{'} = HD_2 * \sin(HA_2), \quad N_2^{'} = HD_2 * \cos(HA_2)$$

$$E_{13}^{'} = HD_{13} * \sin(HA_{13}), \quad N_{13}^{'} = HD_{13} * \cos(HA_{13})$$

The Euclidean coordinates can be transformed by means of a rotation matrix $R = \begin{bmatrix} c & -s \\ s & c \end{bmatrix}$ with rotation angles c, s and a translation vector $T = \begin{bmatrix} t_E \\ t_N \end{bmatrix}$ from the second coordinate frame CF-2 of the surveying instrument to the first coordinate frame CF-1 of the worksite:

$$R * \begin{bmatrix} E_2 \\ N_2 \end{bmatrix} + T = \begin{bmatrix} E_2^{'} \\ N_2^{'} \end{bmatrix} \text{ and } R * \begin{bmatrix} E_{13} \\ N_{13} \end{bmatrix} + T = \begin{bmatrix} E_{13}^{'} \\ N_{13}^{'} \end{bmatrix}$$

Defining the quantities

$$X = \left(N_{13}^{'} - N_2^{'}\right) * (N_{13} - N_2) + \left(E_{13}^{'} - E_2^{'}\right) * (E_{13} - E_2)$$

and

$$Y = \left(E_{13}^{'} - E_2^{'}\right) * (N_{13} - N_2) - \left(N_{13}^{'} - N_2^{'}\right) * (E_{13} - E_2),$$

the rotation angles c, s and the value $\theta$ can be computed by:

$$c = \frac{X}{X^2 + Y^2}, \quad s = \frac{Y}{X^2 + Y^2}, \quad \theta = \arctan\left(\frac{Y}{X}\right).$$

The translation vector $T = \begin{bmatrix} t_E \\ t_N \end{bmatrix}$ is given by:

$$t_E = \frac{E_2^{'} + E_{13}^{'} + s * \left(N_2^{'} + N_{13}^{'}\right) - c * \left(E_2^{'} + E_{13}^{'}\right)}{2}$$

$$t_N = \frac{E_2^{'} + E_{13}^{'} - c * \left(N_2^{'} + N_{13}^{'}\right) - s * \left(E_2^{'} + E_{13}^{'}\right)}{2}$$

The pose vector ($E_S$, $N_S$, ori) is defined by:

$$E_S = t_E, N_S = t_N, ori = \theta$$

The computation of the pose vector as presented for the control points CP-2 and CP-13 is only applicable for free-stationing processes using two control points. A method for computing a pose vector based on three or more control points is known as least-square estimation of Euclidian transformation between two different point patterns. Details about least-square estimation can be found in "Least-squares estimation of transformation parameters between two point patterns." Umeyama, Shinji. IEEE Transactions on Pattern Analysis & Machine Intelligence 13.04 (1991): 376-380.

In statistics, a covariance matrix is a square matrix giving the covariance values between each pair of elements of a given random vector. The well-known covariance matrix Qxx of the pose vector ($E_S$, $N_S$, ori) can be written as:

$$Qxx = \begin{bmatrix} Q_{E_S,E_S} & Q_{E_S,N_S} & Q_{E_S,ori} \\ Q_{N_S,E_S} & Q_{N_S,N_S} & Q_{N_S,ori} \\ Q_{ori,E_S} & Q_{ori,N_S} & Q_{ori,\,ori} \end{bmatrix}$$

The diagonal elements ($Q_{E_S,E_S}$, $Q_{N_S,NS}$, $Q_{ori,\,ori}$) of the covariance matrix represent the variances of the pose elements $E_S$, $N_S$, ori, i.e., covariances of an element with itself, and the off-diagonal elements ($Q_{E_S,N_S} = Q_{N_S,E_S}$, $Q_{ES,ori} = Q_{ori,E_S}$, $Q_{N_S,ori} = Q_{ori,N_S}$) of the covariance matrix represent the covariances between pairs of the pose elements $E_S$, $N_S$, ori.

In step S20, the accuracy that can be achieved during operating the surveying instrument 10 at the point of interest is computed based on the pose vector ($E_S$, $N_S$, ori), the variances ($Q_{E_S,E_S}$, $Q_{N_S,NS}$, $Q_{ori,\,ori}$) and covariances ($Q_{N_S,E_S}$, $Q_{E_S,ori}$, $Q_{N_S,ori}$) of the pose elements, on the measuring accuracies $\sigma_{HD}$, $\sigma_{HA}$ of the surveying instrument 10, and on the coordinates of the point of interest POI in the first coordinate frame CF-1 of the worksite.

The accuracy u(POI) for the point of interest can be computed as follows: The point of interest POI can be denoted by Euclidian coordinates E and N. With the pose vector ($E_S$, $N_S$, ori), the angle and distance values HA and HD of the point of interest POI in the second coordinate frame CF-2 of the surveying instrument 10 can be computed by:

$$HA = \arctan\left(\frac{E_S - E}{N_S - N}\right) - ori$$

$$HD = \sqrt{(E_S - E)^2 + (N_S - N)^2}$$

The covariance matrix $\Sigma_{E,\,N}$ of E and N can be computed through well-known variance propagation by:

$$\Sigma_{E,\,N} = H\Sigma H^T \text{ with } \Sigma = \begin{bmatrix} Qxx & 0 & 0 \\ 0 & \sigma_{HA}^2 & 0 \\ 0 & 0 & \sigma_{HD}^2 \end{bmatrix}$$

and

$$H = \begin{bmatrix} 1 & 0 & HD*\cos(HA + ori) & HD*\cos(HA + ori) & \sin(HA + ori) \\ 0 & 1 & -HD*\sin(HA + ori) & -HD*\sin(HA + ori) & \cos(HA + ori) \end{bmatrix}$$

The accuracy u(POI) that can be achieved at the point of interest POI during operating the surveying instrument 10 can be denoted by:

$$u(POI) = \sqrt{Trace\ \Sigma_{E,N}}$$

For each point of interest, the formula $u(POI) = \sqrt{Trace\ \Sigma_{E,N}}$ is used to compute the accuracy, that can be achieved during operating the surveying instrument 10 at the point of interest POI.

Searching for a layout point, also known as layouting, is a well-known application of a surveying instrument at a worksite. The layout point is a point of interest and has known coordinates in the first coordinate frame of the worksite, and the operator is supported by the surveying instrument in searching for the layout point at the worksite. Upon selecting a layout point and defining an accuracy threshold that must be achieved during layouting, it is checked by the computer system 94 if the accuracy threshold can be achieved.

Usually, an operator has to search for more than one layout point at a worksite. The layout points may be known from a floorplan of the worksite, and a list of layout points is uploaded to the computer system 94. In many cases, the required accuracy threshold that must be achieved during layouting is identical.

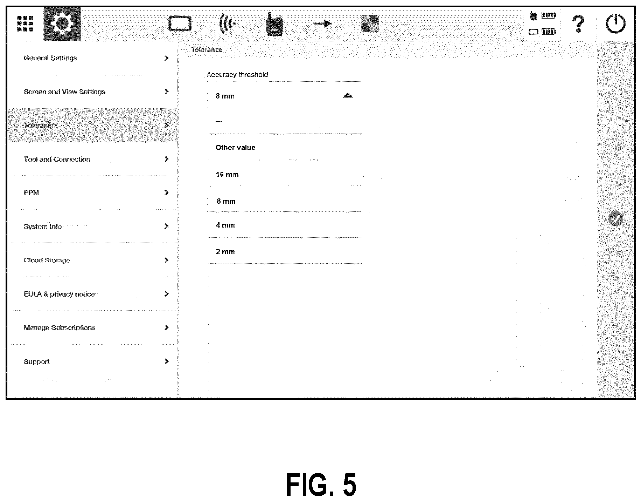

**FIG. 5** illustrates a graphical user interface of an exemplary implementation how the operator can define an accuracy threshold for layout points. The graphical user interface allows the operator to define the accuracy threshold. In the exemplary version, the operator can select the accuracy threshold from a menu of predefined accuracy thresholds, such as 2 mm, 4 mm, 8 mm, or 16 mm, or he can select the option "Other value" and insert any other value for the accuracy threshold.

Alternatively, instead of using a fixed accuracy threshold for several layout points, individual accuracy thresholds can be uploaded together with the list of layout points, or the operator can define individual accuracy thresholds for each layout point he is searching for at the worksite.

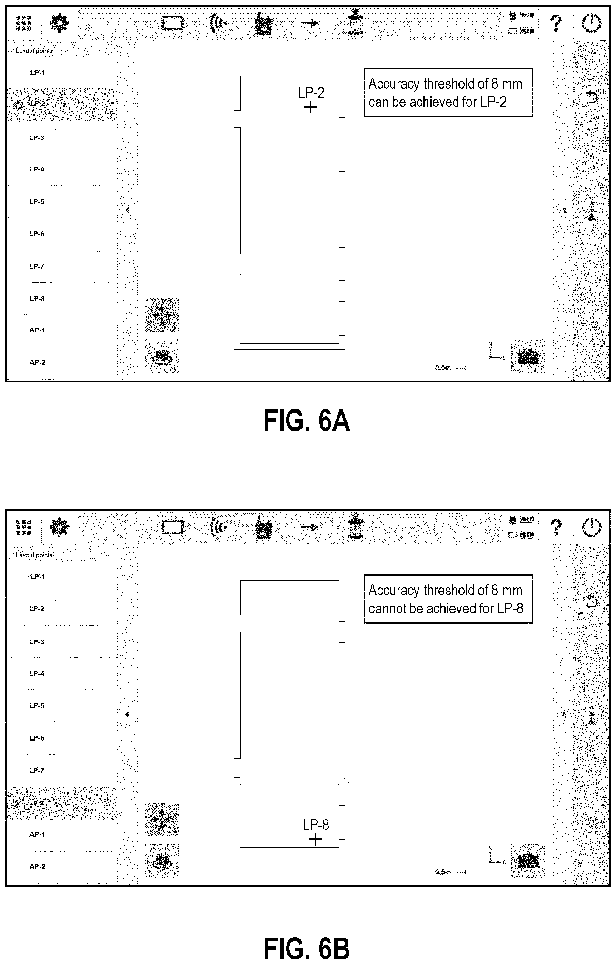

**FIGS. 6A, B** illustrate the graphical user interface of FIG. 5 during layouting, wherein the predefined accuracy threshold can be achieved (FIG. 6A) or cannot be achieved (FIG. 6B).

In FIG. 6A, a first layout point, here LP-2, is selected by the operator from a list of layout points that have been uploaded to the computer system 94. The accuracy that can be achieved for the first layout point LP-2 is compared by the computer system 94 with the defined accuracy threshold of 8 mm, and the operator is informed about the result of the comparison. Upon verification that the accuracy threshold of 8 mm can be achieved for the first layout point LP-2, a predefined action is performed, the predefined action comprising generating a message stating that the accuracy threshold of 8 mmm can be achieved for the layout point LP-2.

In FIG. 6B, a second layout point, here LP-8, is selected by the operator from the list of layout points. The accuracy that can be achieved for the second layout point LP-8 is compared by the computer system 94 with the defined accuracy threshold of 8 mm, and the operator is informed about the result of the comparison. Upon verification that the accuracy threshold of 8 mm cannot be achieved for the second layout point LP-8, a predefined action is performed, the predefined action comprising generating a message stating that the accuracy threshold of 8 mm cannot be achieved for the layout point LP-8.

**Claims**

1. A computer-implemented method for determining an accuracy u(POI), that can be achieved during operating a surveying instrument (10) at a point of interest (LP-2, LP-8), the method being performed by a computer system (94) and comprising the steps:

   ■ Computing for the surveying instrument (10), a pose vector $(E_S, N_S, ori)$ and corresponding variances $(Q_{E_S,E_S}, Q_{N_S,N_S}, Q_{ori, ori})$ and covariances $(Q_{E_S,N_S}, Q_{E_S,ori}, Q_{N_S,ori})$ for the pose elements of the pose vector $(E_S, N_S, ori)$,
   ■ Computing the accuracy u(POI) based on the pose vector $(E_S, N_S, ori)$, the variances $(Q_{E_S,ES}, Q_{N_S,N_S}, Q_{ori, ori})$ and covariances $(Q_{E_S,N_S}, Q_{E_S,ori}, Q_{N_S,ori})$ of the pose elements, on measuring accuracies $(\sigma_{HD}, \sigma_{HA})$ of the surveying instrument (10), and on coordinates (HD, HA) of the point of interest, and
   ■ Instructing a display (101) to visualize the accuracy for the point of interest.

2. Method of claim 1, wherein the accuracy u(POI) that can be achieved at the point of interest is defined by

$$u(POI) = \sqrt{Trace\ H\Sigma H^\mathsf{T}}$$, with $$\Sigma = \begin{bmatrix} Qxx & 0 & 0 \\ 0 & \sigma_{HA}^2 & 0 \\ 0 & 0 & \sigma_{HD}^2 \end{bmatrix},$$

$$H = \begin{bmatrix} 1 & 0 & HD * \cos(HA + ori) & HD * \cos(HA + ori) & \sin(HA + ori) \\ 0 & 1 & -HD * \sin(HA + ori) & -HD * \sin(HA + ori) & \cos(HA + ori) \end{bmatrix},$$

and

$$Qxx = \begin{bmatrix} Q_{E_S,E_S} & Q_{E_S,N_S} & Q_{E_S,ori} \\ Q_{N_S,E_S} & Q_{N_S,N_S} & Q_{N_S,ori} \\ Q_{ori,E_S} & Q_{ori,N_S} & Q_{ori, ori} \end{bmatrix}.$$

3. Method of any one of claims 1 to 2, wherein the accuracy u(POI) that was computed for the point of interest (LP-2, LP-8) is compared by the computer system (94) with a predefined accuracy threshold to verify if the accuracy threshold can be achieved for the point of interest during operating the surveying instrument (10).

4. Method of claim 3, wherein the method further comprises the steps:

- upon verification that the accuracy threshold can be achieved for the point of interest (LP-2), a predefined action is performed, the predefined action comprising generating a message stating that the accuracy threshold can be achieved for the point of interest, and
- upon verification that the accuracy threshold cannot be achieved for the point of interest (LP-8), a predefined action is performed, the predefined action comprising generating a message stating that the accuracy threshold cannot be achieved for the point of interest.

5. A computer program comprising instructions, which, when executed by a computer system (94), cause the computer system (94) to carry out the method according to any one of claims 1 to 4.

6. An apparatus comprising means for carrying out the method according to any one of claims 1 to 4.

**FIG. 1**

FIG. 2A

μP
50

RAM
51
ROM

I/O
53

54
transm. circuit
52

receiver circuit
55

41

15

17
remote controller

18

66
elevation motor
driver circuit

65
elevation motor

46

second angle encoder
45

63
azimuth motor
driver circuit

62
azimuth motor

44

first angle encoder
43

57
laser driver circuit

56
laser transmitter

interface circuit

photosensor

59

42

58

# FIG. 2B

**FIG. 3A**

**FIG. 3B**

S10 — Computing for the total station, a pose vector and corresponding variances and covariances for the pose elements

S20 — Computing the accuracy that can be achieved during operating the total station at the POI based on the pose vector, the variances and covariances of the pose elements, on measuring accuracies of the total station, and on the coordinates of the point of interest

S30 — Instructing a display to visualize the accuracy for the point of interest

# FIG. 4

FIG. 5

**FIG. 6A**

**FIG. 6B**

Europäisches
Patentamt

European
Patent Office

Office européen
des brevets

# EUROPEAN SEARCH REPORT

**Application Number**

EP 24 18 8391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/055102 A1 (RICHTER BERNHARD [AT] ET AL) 25 February 2021 (2021-02-25) | 1,3-6 | INV. G01C15/00 |
| A | * paragraphs [0019], [0041], [0076], [0148] - [0158]; figures 7a,7b * | 2 | |
| | ----- | | |

**TECHNICAL FIELDS SEARCHED (IPC)**

G01C
G01S

The present search report has been drawn up for all claims

| Place of search | Date of completion of the search | Examiner |
|---|---|---|
| The Hague | 29 November 2024 | de la Rosa Rivera, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 8391

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | Publication date | Patent family member(s) | Publication date |
|---|---|---|---|
| US 2021055102 A1 | 25-02-2021 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2024141424 A1

- WO 2024141425 A1

**Non-patent literature cited in the description**

- **UMEYAMA, SHINJI**. Least-squares estimation of transformation parameters between two point patterns. *IEEE Transactions on Pattern Analysis & Machine Intelligence*, 1991, vol. 13 (04), 376-380